# FASCICULE DE BREVET EUROPEEN

(11) **EP 0 874 314 B1**
(45) Date de publication et mention de la délivrance du brevet: **02.10.2002**
(21) Numéro de dépôt: 98400943.1
(22) Date de dépôt: 16.04.1998
(51) Int. Cl.: G06F 11/14

(54) **Système à stations réceptrices de données installées en réseau**
Vorrichtung mit vernetzten Datenempfangsstationen
System of networked data receiving stations

(30) Priorité: 21.04.1997 FR 9704881
(43) Date de publication de la demande: 28.10.1998
(73) Titulaire: ALCATEL, 75008 Paris (FR)
(72) Inventeur: Jouenne, Franck, 94420 Le Plessis Trevise (FR); Guidot, Dominique, 92310 Sevres (FR); Paul-Dubois-Taine, Benoît, 92340 Bourg La Reine (FR)
(74) Mandataire: Sciaux, Edmond

(56) Documents cités:
- EP-A- 0 332 210
- EP-A- 0 616 285
- EP-A- 0 617 362

## Description

L'invention est relative à un système à plusieurs stations réceptrices de données réparties sur un réseau.

Un système de base de données comporte, en général, une station centrale dans laquelle sont stockées de façon permanente les données, le plus souvent sur disque magnétique appelé "disque dur". Dans un certain nombre d'applications, les données sont fournies à partir de stations décentralisées.

Chaque station reçoit des données qu'il est nécessaire de sauvegarder de façon temporaire ou permanente sur une autre station pour se prémunir contre les défaillances de la station recevant les données.

La sauvegarde s'effectue en mémoire vive et/ou en mémoire permanente d'au moins (ou d'au plus) une autre station. Cette sauvegarde peut s'effectuer aussi en mémoire permanente de la station concernée et/ou sur le disque de la station centrale. Le type de sauvegarde dépend de la nature des données.

Ainsi, dans un système de télécommunication, la station centrale comporte des données peu souvent modifiées et fréquemment utilisées qui sont sauvegardées sur disques. Ces données sont, par exemple, la description des abonnés et la configuration du réseau. Ces données sauvegardées sur disques sont appelées des données semi-permanentes. Par ailleurs, d'autres données, dites "produites", telles que la facturation, sont sauvegardées en général sur la mémoire vive et/ou le disque de plusieurs autres stations. Enfin, des données dites contextuelles, telle que la mémorisation de l'emplacement d'un téléphone mobile, ou les connexions établies pour joindre un correspondant, sont sauvegardées en mémoire vive et/ou permanente d'au plus une autre station.

Quel que soit l'emplacement de la sauvegarde des données, celle-ci peut s'effectuer selon deux modes, à savoir un mode synchrone et un mode asynchrone.

La sauvegarde synchrone consiste à effectuer la réplique ou copie des données de façon simultanée ou quasi-simultanée à leur mise en mémoire dans la station d'origine. Ce type de sauvegarde offre une grande sécurité, car elle est effectuée en temps réel et est donc à l'abri des incidents ultérieurs. Elle est cependant contraignante, car elle oblige à mobiliser une communication au moment de l'introduction des données. En outre, la durée de l'opération de mise en mémoire à la station d'origine est imposée par la durée de la communication qui est, en général, sensiblement plus importante que la simple durée de mise en mémoire.

La sauvegarde de type asynchrone consiste à effectuer la modification sur l'original, c'est-à-dire à la station émettrice de la donnée, de façon indépendante de la transmission des données vers les copies ou répliques. La transmission vers les autres stations s'effectue de façon différée. Elle est réalisée soit quand le système de communication est disponible, soit de façon périodique, à des moments préalablement sélectionnés.

Avec une sauvegarde asynchrone, la mise à jour s'effectue localement plus rapidement que lorsque la sauvegarde est synchrone, car la mise à jour sur l'original n'est pas soumise au temps de transmission des données vers une autre station. Par contre, cette sauvegarde est moins sûre car, entre la mise à jour et la transmission des données, qui constitue la sauvegarde, la mise à jour peut être perdue du fait d'un incident dans la station concernée.

L'invention, qui se rapporte à la sauvegarde des données, résulte de la constatation que, dans les systèmes connus jusqu'à présent, la sauvegarde n'est pas optimisée pour toutes les situations.

L'invention telle que définie dans la revendication 1 permet une telle optimisation.

Elle est caractérisée en ce que des moyens sont prévus pour que des données d'une nature déterminée puissent être sauvegardées de façon synchrone ou asynchrone, selon qu'un critère préétabli est satisfait ou non.

Ainsi, pour les données dont on peut choisir à volonté le type de sauvegarde, on dispose d'un degré de liberté qui permet de privilégier, en fonction des circonstances, soit la sécurité de la sauvegarde (mode synchrone), soit la rapidité de la mise à jour et le minimum de perturbations sur les transmissions (mode asynchrone).

Dans le cas d'un système de télécommunication, ce seront les données sauvegardables sur une seule station qui auront cette possibilité de choix entre les sauvegardes synchrone et asynchrone. Il s'agit, en particulier, de données contextuelles. Par contre, les données semi-permanentes seront en principe toujours sauvegardées de façon synchrone. Celles des données produites qui sont sauvegardées sur au moins deux stations, seront en général aussi sauvegardées de façon synchrone, afin de ne pas risquer de sauvegarder des données incohérentes sur plusieurs stations.

Il est à noter que, contrairement aux pratiques habituelles dans les bases de données, on se réserve la possibilité d'effectuer des sauvegardes sur disque de façon asynchrone soit à la station d'origine, soit à une autre station.

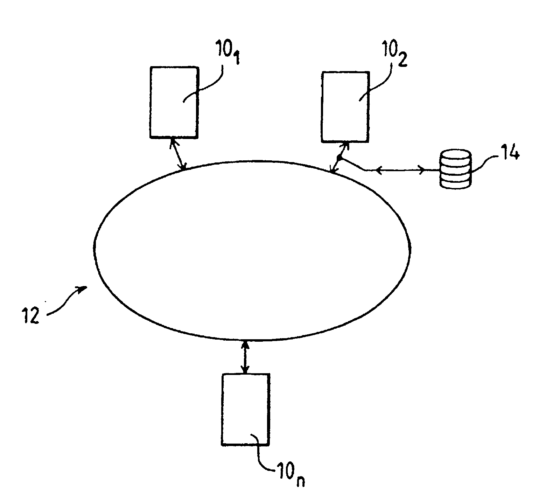

D'autres caractéristiques et avantages de l'invention apparaîtront avec la description de certains de ses modes de réalisation, celle-ci étant effectuée en se référant à la figure unique qui est un schéma d'un système de base de données.

L'exemple de réalisation de l'invention que l'on va décrire en relation avec la figure concerne un système de télécommunication dans lequel un ensemble de stations 10₁, 10₂, ..., 10ₙ sont disposées en réseau 12. En outre, une station centrale 14 est prévue pour une sauvegarde de l'ensemble des données. Cette station 14 est distincte des stations 10ᵢ ; elle peut cependant se trouver au même emplacement que l'une des stations, par exemple la station 10₂, comme représenté.

Chacune des stations comporte un ordinateur avec une mémoire vive (non montrée) et une mémoire permanente, par exemple sous forme de disque magnétique (non représenté).

Dans ce système de télécommunication, chaque station 10ᵢ reçoit des données qui sont mises en mémoire à cette station. Ces données sont aussi sauvegardées sur une autre station, de façon à se prémunir contre les défaillances de la station concernée.

En ce qui concerne la sauvegarde, les données sont classées en trois catégories :
- Les données semi-permanentes qui sont sauvegardées sur le disque de la station centrale 14 et, éventuellement (selon le choix du gestionnaire de fichier), sur le disque d'au moins une autre station que la station émettrice.
- Les données produites qui sont sauvegardées sur au moins une autre station, en mémoire vive et/ou en mémoire permanente.
- Enfin, les données contextuelles qui sont sauvegardées dans la mémoire vive et/ou permanente d'au plus une autre station.

La sauvegarde s'effectue soit de façon synchrone, soit de façon asynchrone.

La sauvegarde synchrone consiste à effectuer les copies de sécurité simultanément, ou quasi-simultanément, à la mise à jour des données dans la station émettrice.

La sauvegarde asynchrone consiste à séparer l'instant de mise à jour dans la station émettrice, de l'instant de réalisation des copies ou de la copie dans une autre station.

Le tableau 1, ci-dessous, illustre la sauvegarde synchrone de la modification d'une donnée dans la mémoire d'une autre station.

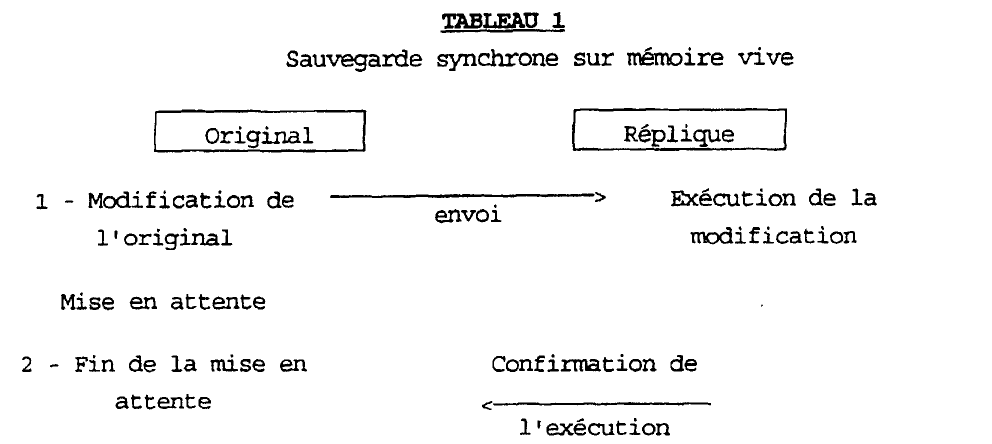

Dans ce tableau, la mention "Original" correspond à la station, par exemple celle de référence 10₁, où est effectuée la modification, et la mention "Réplique" correspond à la station, par exemple celle de référence 10ₙ, où est sauvegardée la mise à jour des données.

Dans cet exemple, la sauvegarde est effectuée sur mémoire vive, et non sur mémoire permanente.

On voit sur le tableau que, au cours d'une première étape, les données de la station émettrice 10₁ sont modifiées dans la mémoire vive, et, en même temps, envoyées à la station de sauvegarde où les données sont enregistrées simultanément (exécution de la modification) dans la mémoire vive de cette station.

Pendant la communication, le programme de modification de la donnée à la station émettrice est mis en attente, c'est-à-dire qu'aucune autre modification ne peut être effectuée, pendant ce temps, par le programme qui modifie la donnée.

Par contre si, à la même station, d'autres données sont modifiées les programmes correspondants s'exécutant à la station peuvent effectuer des modifications sur ces données autres que celle(s) en cours de mise à jour.

Dans un second temps, la station de sauvegarde envoie un message de confirmation de l'exécution à la station émettrice. La réception de ce signal provoque la réactivation du programme de modification.

L'avantage d'une telle procédure de sauvegarde est sa sécurité. La sauvegarde étant effectuée en temps réel, les données sont immédiatement mémorisées dans deux stations, ce qui minimise les risques de pertes des données du fait d'un incident sur l'une des stations.

Le tableau 2, ci-dessous, illustre une sauvegarde asynchrone sur une mémoire vive.

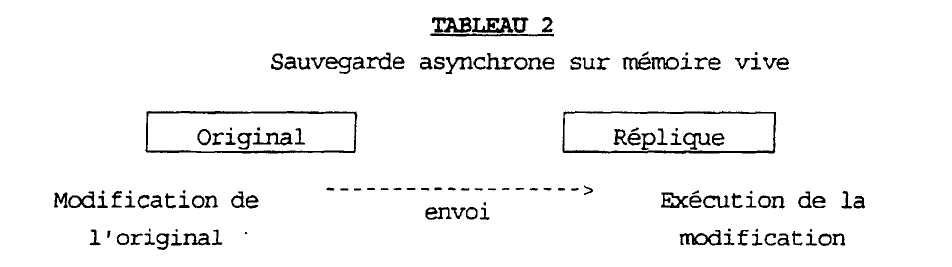

Dans ce tableau et dans les tableaux suivants, les mentions "Original" et "Réplique" ont la même signification que dans le tableau 1.

La flèche en traits interrompus signifie que les données sont mises immédiatement en mémoire à la station émettrice et sont transmises en différé à la station réceptrice pour effectuer la copie en mémoire vive. La transmission s'effectue soit lorsqu'aucune autre communication n'est prévue entre les stations, soit à l'expiration d'un temps prédéterminé, par exemple quelques minutes.

Par rapport à la sauvegarde synchrone, représentée par le tableau 1, cette procédure de sauvegarde présente l'avantage de permettre la minimisation de la durée de la modification à la station émettrice, car elle n'est pas augmentée de la durée de la communication.

Par contre, la sécurité est moins grande car, entre le moment de la modification à la station émettrice et le moment où la modification est transmise à la station réceptrice, il n'existe pas de sauvegarde.

Le tableau 3, ci-dessous, représente une procédure de sauvegarde synchrone en mémoire vive de la station réceptrice et sur disque en station émettrice.

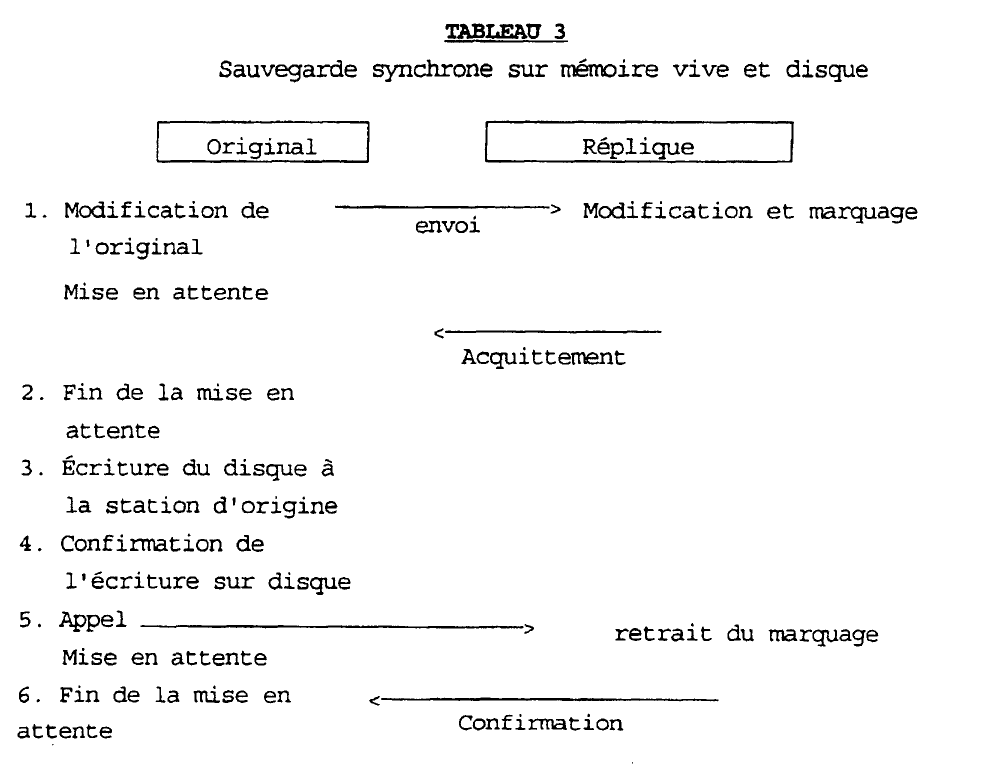

Pour cette procédure, la première étape consiste à modifier l'original et, simultanément, à envoyer la modification vers la mémoire vive de la station réceptrice. Pendant cette communication, de la station émettrice vers la station réceptrice, aucune autre modification ne peut être effectuée à la station émettrice. Comme expliqué ci-dessus en relation avec le tableau 1, la mise en attente concerne seulement le programme exécutant la modification de la donnée.

En mémoire de la station réceptrice, on effectue un marquage indiquant que la donnée a été modifiée. Ce marquage constitue une sécurité, dont le rôle sera expliqué plus loin.

Après la modification à la station réceptrice, cette dernière envoie à la station émettrice un signal d'acquittement qui libère, à cette station, le programme d'exécution des modifications.

La troisième étape consiste à écrire la modification sur le disque (mémoire permanente) de la station émettrice.

Ensuite (quatrième étape), le programme de modification est de nouveau libéré.

La cinquième étape consiste à envoyer, à partir de la station émettrice, un signal vers la station réceptrice de manière à éliminer le marquage sur l'enregistrement en mémoire vive de cette station réceptrice.

La dernière étape libère le programme de modification.

La marque provisoire, qui a été inscrite en mémoire de la station réceptrice, permet de limiter les données à récupérer (les données modifiées), en cas d'incidents à la station émettrice.

Ce procédé offre une grande sécurité. Mais, il présente l'inconvénient de nécessiter une durée de communication ou de temps d'exécution relativement importante.

Le tableau 4, ci-dessous, représente la procédure de sauvegarde asynchrone en mémoire vive d'une autre station et sur le disque de la station émettrice.

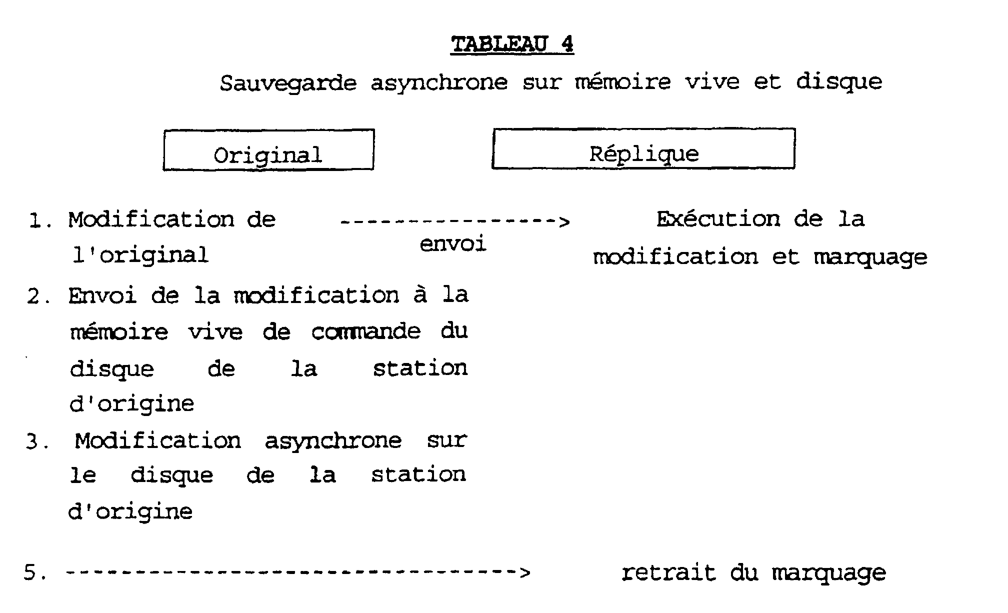

La première étape est la modification de l'original de la station d'origine. Cette modification est transmise en mode asynchrone à la réplique. La mémoire vive de la réplique est mise à jour et marquée quand la communication est établie.

Ensuite, ou simultanément, la modification est envoyée à la mémoire vive de commande du disque de la station d'origine. Le disque est mis à jour en mode asynchrone.

Une fois le disque mis à jour un signal de retrait de marquage est envoyé, également en mode asynchrone, vers la mémoire vive, ou réplique, de la station réceptrice.

Certaines données seront toujours sauvegardées de façon synchrone. D'autres données seront, à la demande, sauvegardées de façon synchrone ou asynchrone. On peut noter que si, dans une même requête, on prévoit des données qui doivent être sauvegardées de façon synchrone et d'autres données de façon asynchrone, la sauvegarde se fera automatiquement de façon synchrone.

L'invention réside dans la possibilité, au moins pour certaines données, d'effectuer à volonté une sauvegarde, soit en mode synchrone (tableau 1 ou 3), soit en mode asynchrone (tableau 2 ou 4).

Un exemple d'application de l'invention est le suivant : dans un système de télécommunication, le routage, pour établir une connexion entre deux points déterminés, s'effectue de façon progressive. Les données de routage sont des données contextuelles. Si le routage n'est pas terminé, les données relatives au routage seront sauvegardées en mode asynchrone. Par contre, quand l'opération de routage sera terminée, les données contextuelles correspondantes seront sauvegardées en mode synchrone.

L'invention n'est, bien entendu, pas limitée au type de transmission dans le réseau. Cette transmission peut être du type Ethernet, ATM, etc.

## Revendications

1. Système de base de données comprenant une pluralité de stations (10₁, 10₂...10ₙ) communiquant entre elles, les données introduites ou mises à jour dans une station d'origine étant sauvegardées dans au moins une autre station dite réceptrice, **caractérisé en ce que** des moyens sont prévus pour que des données d'une nature déterminée puissent être sauvegardées de façon synchrone ou de façon asynchrone sur une autre station selon qu'un critère préétabli est satisfait ou non.

2. Système selon la revendication 1, **caractérisé en ce qu'**une sauvegarde dans une mémoire permanente, tel qu'un disque, est effectuée à la station d'origine.

3. Système selon la revendication 2, **caractérisé en ce qu'**à la station d'origine, on effectue, de façon asynchrone, une sauvegarde en mémoire permanente.

4. Système selon la revendication 2 ou 3, **caractérisé en ce que** la sauvegarde en mémoire vive d'une autre station est effectuée préalablement à la sauvegarde en mémoire permanente à la station d'origine.

5. Système selon la revendication 4, **caractérisé en ce qu'**on effectue un marquage des données en cours de sauvegarde dans la mémoire vive de la station réceptrice, ce marquage étant éliminé après la réalisation de la sauvegarde en mémoire permanente à la station d'origine.

6. Système selon l'une quelconque des revendications précédentes, **caractérisé en ce qu'**une donnée modifiée de façon progressive est sauvegardée de façon asynchrone avant la fin de la modification et est sauvegardée de façon synchrone à la fin de la modification.

7. Système selon l'une quelconque des revendications précédentes, **caractérisé en ce que** les données sont des données de télécommunication.

8. Système selon les revendications 6 et 7, **caractérisé en ce que** les données modifiables progressivement sont des données de routage.

9. Système selon l'une quelconque des revendications précédentes, **caractérisé en ce qu'**une donnée d'une nature déterminée est sauvegardée en mode asynchrone quand on souhaite minimiser le temps de mise en mémoire à la station d'origine et **en ce que** les données sont sauvegardées de façon synchrone, lorsqu'on souhaite maximiser la sécurité de la sauvegarde.

## Patentansprüche

1. Datenbanksystem mit einer Mehrzahl von untereinander kommunizierenden Stationen (10₁, 10₂, ..., 10ₙ), wobei die an einer Ursprungsstation eingegebenen oder aktualisierten Daten in wenigstens einer anderen Station, als Empfängerstation bezeichnet, gesichert werden, **dadurch gekennzeichnet, dass** Mittel vorgesehen sind, damit Daten einer vorgegebenen Art synchron oder asynchron gesichert werden können, je nachdem, ob ein vorgegebenes Kriterium erfüllt ist oder nicht.

2. System nach Anspruch 1, **dadurch gekennzeichnet, dass** eine Sicherung in einem Permanentspeicher wie etwa einer Platte an der Ursprungsstation durchgeführt wird.

3. System nach Anspruch 2, **dadurch gekennzeichnet, dass** an der Ursprungsstation asynchron eine Sicherung im Permanentspeicher durchgeführt wird.

4. System nach Anspruch 2 oder 3, **dadurch gekennzeichnet, dass** die Sicherung in einen Flüchtigspeicher einer anderen Station vor der Sicherung in Permanentspeicher an der Ursprungsstation durchgeführt wird.

5. System nach Anspruch 4, **dadurch gekennzeichnet, dass** eine. Kennzeichnung der Daten bei der Sicherung im Flüchtigspeicher der Empfängerstation durchgeführt wird, wobei diese Kennzeichnung nach Durchführung der Sicherung im Permanentspeicher der Ursprungsstation beseitigt wird.

6. System nach einem beliebigen der vorhergehenden Ansprüche, **dadurch gekennzeichnet, dass** ein fortlaufend modifizierter Datenwert vor Ende der Modifizierung asynchron gesichert wird und am Ende der Modifizierung synchron gesichert wird.

7. System nach einem beliebigen der vorhergehenden Ansprüche, **dadurch gekennzeichnet, dass** die Daten Fernmeldedaten sind.

8. System nach den Ansprüchen 6 und 7, **dadurch gekennzeichnet, dass** die fortlaufend modifizierbaren Daten Leitweglenkungsdaten sind.

9. System nach einem beliebigen der vorhergehenden Ansprüche, **dadurch gekennzeichnet, dass** ein Datenwert von vorgegebener Art im asynchronen Modus gesichert wird, wenn die Sicherungszeit an der Ursprungsstation minimiert werden soll, und dass die Daten synchron gesichert werden, wenn die Sicherheit der Sicherung maximiert sein soll.

## Claims

1. A database system comprising a plurality of stations (10₁, 10₂, ..., 10ₙ) communicating with one another, data inserted or updated in an originating station being backed up in at least one other station referred to as a "receiving" station, the system being **characterized in that** means are provided so that data of a determined kind can be backed up synchronously or asynchronously on another station depending on whether or not a preestablished criterion is satisfied.

2. A system according to claim 1, **characterized in that** backup in non-volatile memory, such as a hard disk, takes place at the originating station.

3. A system according to claim 2, **characterized in that** backup is performed in non-volatile memory at the originating station in asynchronous manner.

4. A system according to claim 2 or 3, **characterized in that** backup is performed in read/write memory of another station prior to performing backup in non-volatile memory at the originating station.

5. A system according to claim 4, **characterized in that** data that is being backed up in the read/write memory of the receiving station is marked, with the mark being removed after backup has been achieved in the non-volatile memory of the originating station.

6. A system according to any preceding claim, **characterized in that** data that is modified in progressive manner is backed up asynchronously until modification has terminated, and is backed up synchronously at the end of modification.

7. A system according to any preceding claim, **characterized in that** the data is telecommunications data.

8. A system according to claims 6 and 7, **characterized in that** the progressively modifiable data is routing data.

9. A system according to any preceding claim, **characterized in that** data of a determined kind is backed up in asynchronous mode when it is desired to minimize the time required for putting the data into memory at the originating station, and **in that** the data is backed up in synchronous mode when it is desired to maximize backup security.
